# EUROPEAN PATENT APPLICATION

(11) **EP 4 755 973 A1**
(43) Date of publication of application: **10.06.2026**
(21) Application number: 24926284.1
(22) Date of filing: 11.12.2024
(51) Int. Cl.: C08L 67/02, C08L 25/12, C08K 7/14, C08J 5/04

(54) **POLYESTER RESIN COMPOSITION, METHOD FOR PREPARING SAME, AND MOLDED ARTICLE PRODUCED THEREFROM**

(30) Priority: 20.09.2024 KR 20240127364
(71) Applicant: LG Chem, Ltd., Seoul 07336 (KR)
(72) Inventor: LEE, Hyun Seok, Seoul 07796 (KR); SON, Sun Mo, Seoul 07796 (KR); YANG, Hyunsuk, Seoul 07796 (KR); SHIN, Kwang Ho, Seoul 07796 (KR)
(74) Representative: Goddar, Heinz J.
(86) International application number: PCT/KR2024/096658
(87) International publication number: WO 2026/063580

(57) **Abstract**

The present invention relates to a polyester resin composition, a method of preparing the same, and a molded article manufactured using the same. The polyester resin composition according to the present invention may have excellent large-area, low-strain characteristics by using a large-area low-strain material as a raw material, satisfy the physical property balance between mechanical properties, fluidity, and thermal stability, suppress fogging even at high temperatures, and thus provide excellent product reliability and appearance to a molded article manufactured using the polyester resin composition.

## Description

### [Technical Field]

### [Cross-Reference to Related Application]

This application claims priority to Korean Patent Application No. 10-2024-0127364, filed on September 20, 2024, in the Korean Intellectual Property Office, the disclosure of which is incorporated herein by reference.

The present invention relates to a polyester resin composition, a method of preparing the same, and a molded article manufactured using the same. More particularly, the present invention relates to a polyester resin composition having excellent large-area, low-strain characteristics by using a large-area low-strain material as a raw material, satisfying the physical property balance between mechanical properties, fluidity, and thermal stability, suppressing fogging even at high temperatures, and providing excellent product reliability and appearance to a molded article manufactured using the polyester resin composition, a method of preparing the polyester resin composition, and a molded article manufactured using the polyester resin composition.

### [Background Art]

In the past, when manufacturing housings for automobile interior parts such as instrument panels and navigation systems, composite materials obtained by reinforcing polybutylene terephthalate resin (PBT) with glass fibers were mainly used to improve electrical insulation properties, reduce weight, and reduce manufacturing costs.

Recently, issues regarding the development of materials for new, thin, large-screen instrument panels and navigation systems have emerged, including the development of a 25-inch head-up display (HUD) screen that is more than twice as large as the existing 12-inch screen. For these materials, prevention of warpage deformation is an important factor, and in the composite material, crystal formation of polybutylene terephthalate resin and anisotropy of glass fiber can have a negative effect.

Therefore, to apply the composite material to new large-screen, thin-walled instrument panels and navigation systems, low-strain materials are being developed by alloying various resins such as ABS, ASA, and PC with PBT. However, it is difficult to simultaneously achieve excellent low deformation and thermal stability and high-temperature fogging prevention as basic properties that can be applied to the housing of a 25-inch head-up display (HUD). Therefore, the development of a composite material that can simultaneously achieve the above properties is required.

### [Related Art Documents]

### [Patent Documents]

Japanese Patent Application Publication No. 2019-151811 (Publication date: September 12, 2019)

### [Disclosure]

### [Technical Problem]

Therefore, the present invention has been made in view of the above problems, and it is one object of the present invention to provide a polyester resin composition capable of implementing excellent mechanical strength, fluidity, thermal stability, and physical property balance at low cost without warpage deformation in large-area parts and a method of preparing the same.

It is another object of the present invention to provide a molded article having high-temperature anti-fogging ability manufactured using the polyester resin composition.

The above and other objects can be accomplished by the present invention described below.

### [Technical Solution]

I) In accordance with one aspect of the present invention, provided is a polyester resin composition including a polyester resin; a non-graft copolymer consisting of an aromatic vinyl compound-vinyl cyanide compound; and a fiber-reinforcing agent,
   wherein, when an MD direction length (unit: mm) and a TD direction length (unit: mm) are measured by a lifting test and a value (TD/MD) is obtained by dividing the TD direction length by the MD direction length, the polyester resin composition has a value (TD/MD) of 1.60 or less, and
   wherein the polyester resin composition has a haze of 10.0 or less as measured by a fogging test (150 °C, 5 hr).
II) According to I), the polyester resin may be a polyalkylene terephthalate resin.
III) According to I) to II), the polyester resin may have an intrinsic viscosity (η) of 0.7 to 0.9 dl/g.
IV) According to I) to III), based on 100 % by weight in total of the polyester resin composition, the polyester resin may be included in an amount of 56 % by weight or more.
V) According to I) to IV), the non-graft copolymer may include 20 % by weight or more of a vinyl cyanide compound.
VI) According to I) to V), the non-graft copolymer may have a heat deflection temperature of 96.5 °C or higher as measured in 18.6 kgf standard according to ASTM D648 and a melting index (220 °C, 10 kgf) of 28 to 32 as measured according to ASTM D1238.
VII) According to I) to VI), based on 100 % by weight in total of the polyester resin composition, the non-graft copolymer may be included in an amount of 12 % by weight or less.
VIII) According to I) to VII), the fiber-reinforcing agent may be a glass fiber.
IX) According to I) to VIII), the glass fiber may include SiO₂, CaO, and Al₂O₃, and an SiO₂ content may be greater than a sum of CaO and Al₂O₃ contents.
X) According to I) to IX), the glass fiber may include 50 to 55 % by weight of SiO₂, 15 to 21 % by weight of Al₂O₃, and 13 to 19 % by weight of CaO.
XI) According to I) to X), based on 100 % by weight in total of the polyester resin composition, the fiber-reinforcing agent may be included in an amount of 20 to 40 % by weight.
XII) According to I) to XI), the polyester resin composition may include an antioxidant and/or a lubricant, and each of the antioxidant and the lubricant may be included in an amount of 0.1 to 10 % by weight based on 100 % by weight in total of the polyester resin, the non-graft copolymer, the fiber-reinforcing agent, the antioxidant, and the lubricant.
XIII) According to I) to XII), the polyester resin composition may include a colorant in an amount of 0.1 to 10 parts by weight based on 100 parts by weight in total of the polyester resin, the non-graft copolymer, the fiber-reinforcing agent, the antioxidant, and the lubricant.
XIV) According to I) to XIII), the polyester resin composition may have a high-load heat deflection temperature of 190 °C or higher as measured under 1.82 MPa according to 100 ISO 75, and may have a flexural strength of 180 MPa or more and a flexural modulus of 8000 MPa or more as measured at a rate of 2 mm/min using a 4.0 mm specimen and SPAN 64 according to ISO 178.
XV) According to I) to XIV), when measuring a lifting distance from a floor to four corners using a square specimen having a size of 100 mm × 100 mm × 1.56 mm according to a low-strain assessment method, the polyester resin composition may have a maximum lifting height of 5.0 mm or less.
XVI) In accordance with another aspect of the present invention, provided is a polyester resin composition including a polyester resin; a non-graft copolymer consisting of an aromatic vinyl compound-vinyl cyanide compound; and a fiber-reinforcing agent,
   wherein the polyester resin composition has a haze of 10.0 or less as measured by a fogging test (150 °C, 5 hr).
XVII) In accordance with still another aspect of the present invention, provided is a polyester resin composition including a polyester resin; a non-graft copolymer consisting of an aromatic vinyl compound-vinyl cyanide compound; and a fiber-reinforcing agent,
   wherein the non-graft copolymer has an MI value of greater than 28 and less than 32, and a content of the non-graft copolymer is 12 % by weight or less.
XVIII) In accordance with still another aspect of the present invention, provided is a method of preparing a polyester resin composition, the method including kneading and extruding a polyester resin; a non-graft copolymer consisting of an aromatic vinyl compound-vinyl cyanide compound; and a fiber-reinforcing agent,
   wherein, when an MD direction length (unit: mm) and a TD direction length (unit: mm) are measured using a shrinkage specimen (size: 60 mm × 60 mm × 2 mm) and a value (TD/MD) is calculated by dividing the TD direction length (unit: mm) by the MD direction length (unit: mm), wherein the polyester resin composition has a value (TD/MD) of 1.60 or less, and wherein the polyester resin composition has a haze of 10.0 or less as measured by a fogging test (150 °C, 5 hr).
XIX) In accordance with yet another aspect of the present invention, provided is a molded article including the above-described polyester resin composition.
XX) According to XIX), the molded article may be an automotive interior part housing.
XXI) According to XIX) to XX), the automotive interior part may include an instrument panel, a navigation system, and the like.
XXII) According to XIX) to XXI), the automotive interior part may be a large-screen head-up display (HUD) larger than 12 inches.

### [Advantageous Effects]

A polyester resin composition according to the present invention can provide a molded article having excellent large-area, low-strain characteristics, having the physical property balance between mechanical properties and thermal stability that is equivalent to or superior to that of conventional large-area, low-strain alloy polyester materials, having excellent processability due to improved melt flow index, and having improved product reliability and appearance.

That is, the molded article manufactured using the polyester resin composition according to the present invention has excellent large-area, low-strain characteristics and excellent physical property balance between mechanical properties, such as tensile strength and flexural strength, and thermal stability and can provide high-temperature anti-fogging ability, thereby implementing product reliability and appearance.

Therefore, the molded article according to the present invention can be more suitable for large-area parts of large-area thin instrument panels and navigation systems.

### [Description of Drawings]

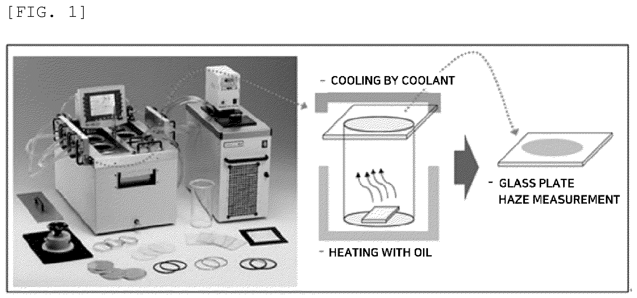

FIG. 1 illustrates an apparatus and process for testing high-temperature anti-fogging ability.

### [Best Mode]

Hereinafter, the present invention will be described in more detail to aid in understanding of the present invention.

The terms and words which are used in the present specification and the appended claims should not be construed as being confined to common meanings or dictionary meanings but should be construed as having meanings and concepts matching the technical spirit of the present invention in order to describe the present invention in the best fashion.

In this description, a polymer including a certain compound means a polymer prepared by polymerizing the compound, and a unit in the polymer is derived from the compound.

Unless otherwise specified, all numbers, values, and/or expressions expressing quantities of ingredients, reaction conditions, polymer compositions, and formulations used herein are to be understood as being qualified by the term "about." This is because these numbers are essentially approximations that reflect, among other things, the various uncertainties of measurement that arise in obtaining these values. In addition, when numerical ranges are disclosed in this disclosure, such ranges are contiguous and include all values from the minimum value to the maximum value of such ranges unless otherwise indicated. Also, when such ranges refer to integers, all integers inclusive from the minimum value to the maximum value are included unless otherwise specified.

In the present disclosure, when a range is specified for a variable, it will be understood that the variable includes all values within a range including the endpoints of the range. For example, a range of "5 to 10" includes values of 5, 6, 7, 8, 9, and 10, any subranges such as 6 to 10, 7 to 10, 6 to 9, and 7 to 9, and any values among integers that fit within the scope of a range such as 5.5 to 8.5 and 6.5 to 9. Also, a range of 10 to 30 % includes values such as 10 %, 11 %, 12 %, and 13 %, all integers up to 30 %, and any values among all reasonable integers within the scope of a range, such as 10.5 %, 15.5 %, 25.5 %.

In the present disclosure, the term "MD, TD measured by the lifting test" refers to a type of low-strain assessment method unless otherwise specified. MD, TD measured by the lifting test means that, after producing a shrinkage specimen with a size of 60 mm × 60 mm × 2 mm, the specimen is stored in a constant temperature/humidity room at 23 °C/50 % RH for more than 24 hours, the specimen is fixed with a jig to align the bottom surface and the specimen horizontally, and the MD direction length (unit: mm) and the TD direction length (unit: mm) are measured.

In the present disclosure, the term "haze measured by fogging test" refers to a type of low-strain assessment method, unless otherwise specified, in which a square specimen with a size of 100 mm × 100 mm × 1.5 mm is manufactured and then cut into 10 g pieces, and measured with reference to the apparatus and process description shown in FIG. 1.

Specifically, before putting 10 g of the specimen into a test tube, check if there is any remaining material in the test tube, and wipe the inside of the test tube and a transparent glass plate three times using a 70 % concentration ethanol solution. Since ethanol may remain in the test tube, use a hair dryer to dry it before use.

The test specimen is dried at 120 °C for 2 to 4 hours before measurement and then stored in a constant temperature/humidity room at 23 °C/50 % RH for more than 24 hours before use.

When the test tube and transparent glass plate are prepared, 10 g of the specimen is placed in the test tube and the opening is sealed with the transparent glass plate. The measurement temperature (150 °C) and cooling temperature (23 °C) are set and the test tube is immersed in the device of FIG. 1 for 5 hours, and the haze value of the glass plate is measured using a haze meter.

When measuring the haze value, the haze value for the total of three parts, the center part of the glass plate and the left and right parts based on the center, is measured and the average value is recorded as the haze value for the specimen. At this time, as the haze value decreases, the occurrence of the fogging phenomenon decreases.

As used herein, unless otherwise specified, the term "melt flow index" may be a melt flow index measured at 265 °C under a load of 2.16 kg according to ISO 1133.

In the present disclosure, the content (wt%) of a unit in a polymer, a monomer, or a block may mean the content (wt%) of a derived monomer.

In the present disclosure, the content (wt%) of a unit in a polymer, a monomer, or a block may be measured using measurement methods commonly used in the art to which the present invention pertains, or the content of added monomers may be defined as the content of units in a prepared polymer under the premise that all monomers are polymerized.

The present inventors confirmed that, in using a low-strain polyester material as a new type of large-screen, thin-walled automobile interior part material, when preparing a composite material containing a polyester resin to provide rigidity and thermal stability of the material, when controlling the content of the aromatic vinyl compound-vinyl cyanide compound constituting a non-graft copolymer while including a fiber-reinforcing agent, product reliability and appearance were achieved by providing excellent physical property balance between mechanical properties, fluidity, and thermal stability and high-temperature anti-fogging ability. Based on these results, the present inventors conducted further studies to complete the present invention.

### Polyester resin composition

A polyester resin composition according to one embodiment of the present invention includes a polyester resin; a non-graft copolymer consisting of an aromatic vinyl compound-vinyl cyanide compound; and a fiber-reinforcing agent.

### Polyester resin

The polyester resin imparts moldability to a resin composition including the same, and imparts thermal stability to a molded article manufactured using the same.

For example, the polyester resin may be a polyalkylene terephthalate resin, preferably polybutylene terephthalate resin.

The polyester resin is a crystalline resin and prevents penetration of chemicals from the outside. In addition, since the polyester resin has a crystallized structure, the flowability of the polyester resin composition including the polyester resin may be improved during injection molding, thereby improving appearance.

The polybutylene terephthalate resin (PBT) may have a repeat unit represented by Formula 1 below.

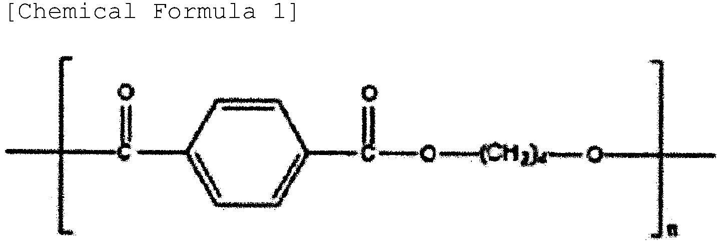

In Chemical Formula 1, n represents an average degree of polymerization ranging from 50 to 200.

In one embodiment of the present invention, to increase the impact strength of the polyester resin composition, a copolymer resin obtained by copolymerizing the polybutylene terephthalate resin and an impact-improving compound such as polytetramethylene glycol, polyethylene glycol, polypropylene glycol, aliphatic polyester, or aliphatic polyamide or a modified polybutylene terephthalate resin obtained by mixing the polybutylene terephthalate resin and the impact-improving compound may be used.

For example, the polyester resin, preferably polybutylene terephthalate resin, may have a weight average molecular weight may have 10,000 to 80,000 g/mol, 20,000 g/mol to 100,000 g/mol, 30,000 g/mol to 90,000 g/mol, 40,000 g/mol to 80,000 g/mol, or 50,000 g/mol to 80,000 g/mol. Within this range, mechanical properties may be improved.

When measuring weight average molecular weight, a sample having a concentration of 1 wt% is prepared by putting tetrahydrofuran (THF) and a compound in a 1 ml glass bottle. Then, after filtering a standard sample (polystyrene) and the sample through a filter (pore size: 0.45 µm), the filtered samples are injected into a GPC injector. Then, the weight average molecular weight and molecular weight distribution of the compound may be obtained by comparing the elution time of the sample with the calibration curve of the standard sample. At this time, Infinity II 1260 (Agilient Co.) may be used as measuring instrument, and flow rate may be set to 1.00 mL/min and column temperature may be set to 40.0 °C.

For example, based on 100 % by weight in total of the polyester resin composition (polyester resin + non-graft copolymer + fiber-reinforcing agent), the polyester resin may be included in an amount of 56 % by weight or more; or the polyester resin composition may include an antioxidant and a lubricant and the polyester resin may be included in an amount of 56 % by weight or more based on 100 % by weight in total of the polyester resin, the non-graft copolymer, the fiber-reinforcing agent, the antioxidant, and the lubricant. When the content is less than the content range, as the amount of the non-graft copolymer used increases, the problem of reduced high-temperature anti-fogging ability may occur. When the content exceeds the content range, a decrease in the amount of the non-graft copolymer used may result in a decrease in the ability to prevent warpage deformation, or a decrease in the amount of the fiber reinforcement agent used may result in an overall deterioration in physical properties.

As a specific example, based on 100 % by weight in total of the polyester resin composition, the polyester resin may be included in an amount of 57.5 to 90 % by weight; or when the polyester resin composition includes an antioxidant and a lubricant, the polyester resin may be included in an amount of 57.5 to 90 % by weight based on 100 % by weight in total of the polyester resin, the non-graft copolymer, the fiber-reinforcing agent, the antioxidant, and the lubricant.

Preferably, based on 100 % by weight in total of the polyester resin composition, the polyester resin may be included in an amount of 58 to 80 % by weight; or when the polyester resin composition includes an antioxidant and a lubricant, the polyester resin may be included in an amount of 58 to 80 % by weight based on 100 % by weight in total of the polyester resin, the non-graft copolymer, the fiber-reinforcing agent, the antioxidant, and the lubricant.

The polyester resin, preferably polybutylene terephthalate resin, may have an intrinsic viscosity (η) of 0.7 to 0.9 dl/g or 0.75 to 0.85 dl/g. When the intrinsic viscosity is less than the range, an effect of reinforcing physical properties may decrease, and as a result, an effect of improving non-halogen thermal stability may be insignificant. When the intrinsic viscosity exceeds the range, moldability may deteriorate, and as a result, the appearance of a part may be poor.

In the present disclosure, when intrinsic viscosity is measured, unless noted otherwise, a sample solution with a concentration of 0.05 g/ml is prepared by completely dissolving a sample in methylene chloride as a solvent, and then is filtered using a filter to obtain a filtrate. Then, using the obtained filtrate, intrinsic viscosity is measured at 20 °C using a Ubbelohde viscometer.

A method of preparing the polyester resin is not particularly limited as long as the method is a polymerization method commonly practiced in the technical field to which the present invention belongs, and a commercially available polyester resin may be used as long as the commercially available polyester resin conforms to the definition of resin according to the present invention.

### Non-graft copolymer

In the present disclosure, the non-graft copolymer (hereinafter referred to as SAN) is used to resolve warpage deformation caused by crystal formation of the polyester resin and to supplement the rigidity of internal components.

For example, the non-graft copolymer may be an aromatic vinyl compound-vinyl cyanide compound copolymer.

As a specific example, the non-graft copolymer may be a copolymer including 60 to 80 % by weight of an aromatic vinyl compound and 20 to 40 % by weight of a vinyl cyanide compound, preferably a copolymer including 65 to 75 % by weight of an aromatic vinyl compound and 25 to 35 % by weight of a vinyl cyanide compound.

The aromatic vinyl compound included in the non-graft copolymer may include a common aromatic vinyl compound, for example, styrene, which may be used in the present invention, but is not limited to including only a specific aromatic vinyl compound.

In addition, the vinyl cyanide compound included in the non-graft copolymer may include a common vinyl cyanide compound, for example, acrylonitirile, which may be used in the present invention, but is not limited to including only a specific vinyl cyanide compound.

Accordingly, the non-graft copolymer may be a resin polymerized from components in the above-mentioned specific content range, and may preferably be a styrene acrylonitrile (SAN) resin capable of improving the rigidity of an automotive interior part.

For example, the non-graft copolymer may have a heat deflection temperature (HDT) of 96.5 °C or higher as measured in 18.6 kgf standard according to ASTM D648, and may have a melting index (220 °C, 10 kgf) of 28 to 32 as measured according to ASTM D1238. In this case, excellent moldability may be provided while maintaining the heat resistance of the polyester resin composition.

As a specific example, the non-graft copolymer may have a heat deflection temperature (HDT) of 97 to 100 °C as measured in 18.6 kgf standard according to ASTM D648, and may have a melting index (220 °C, 10 kgf) of 28 to 30 as measured according to ASTM D1238. In this case, excellent moldability may be provided while maintaining the heat resistance of the polyester resin composition.

For example, when gas quality (T-VOC, 250 °C/10min in Purge & Trap) is measured using GC/MS, the non-graft copolymer may have a styrene content of 200 ppm or less, preferably 150 ppm or less, more preferably 1 to 130 ppm, and/or may have an ethylbenzene content of 50 ppm or less, preferably 10 ppm, more preferably 1 to 5 ppm, and/or may have a toluene content of 55 ppm or less, preferably 53 ppm or less, more preferably 1 to 53 ppm. In this case, the occurrence of haze in the polyester resin composition may be minimized.

For example, when gas quality (T-VOC, 250 °C/10min in Purge & Trap) is measured using GC/MS, in the non-graft copolymer, the content of each of xylene, isopropyl benzene, propyl benzene, benzaldehyde, alpha methyl styrene, t-butylbenzene, n-butylbenzene, sec-butylbenzene, benzene acetaldehyde, acetophenone, cumyl alcohol, 1,2-dicyanocyclobutane, benzene butane nitrile, erucamide, and C12 hydrocarbon may be 10 ppm or less, or these gases may not be detected. In this case, the occurrence of haze in the polyester resin composition may be minimized.

For example, the non-graft copolymer may have an oligomer content of 500 ppm or less, preferably 350 ppm, more preferably 1 to 250 ppm as measured using GC/MS. In this case, the occurrence of haze in the polyester resin composition may be minimized.

In the present disclosure, "oligomer" follows the definition commonly used in the art to which the present invention belongs. As a specific example, the oligomer may be derived from a monomer having a relatively low molecular weight, and may mean a molecule having a relatively intermediate molecular weight, made up of 2 to 20 monomer units. The "molecule having relatively intermediate molecular weight" is a molecule whose properties are not significantly changed when one or a few monomer units are removed.

Regarding gas quality, Comparative Example 2 described below corresponds to an experiment using a non-graft copolymer (B2) prepared by performing degassing treatment once after initiator polymerization, and Comparative Example 3 corresponds to an experiment using a non-graft copolymer (B3) prepared by performing degassing treatment twice after thermal polymerization. Compared to Examples using a non-graft copolymer (B1) prepared by performing degassing treatment twice after initiator polymerization, it was confirmed that the comparative examples had relatively poor gas quality, making it difficult to satisfy haze characteristics.

As long as the proposed gas quality is satisfied, the non-graft copolymer may be prepared without any special limitation by a polymerization method commonly practiced in the technical field to which the present invention belongs. Commercially available products may be used as long as the products meet the gas quality of the non-graft copolymer according to the present invention.

For example, based on 100 % by weight in total of the polyester resin composition, the non-graft copolymer may be included in an amount of 12 % by weight or less; or when the polyester resin composition includes an antioxidant and a lubricant, the non-graft copolymer may be included in an amount of 12 % by weight or less based on 100 % by weight in total of the polyester resin, the non-graft copolymer, the fiber-reinforcing agent, the antioxidant, and the lubricant. When the content of the non-graft copolymer is less than the range, the rigidity of an automotive interior part manufactured using a composite resin composition including the non-graft copolymer may be poor, and the ability to prevent warpage deformation may be reduced. When the content of the non-graft copolymer exceeds the range, the heat resistance and impact resistance of an automotive interior part manufactured using a composite resin composition including the non-graft copolymer may be poor, and high-temperature anti-fogging ability may be reduced.

That is, since the polyester resin composition according to one embodiment of the present invention includes 56 % by weight or more of a polyester resin, preferably polybutylene terephthalate resin; and 12% by weight or less of a non-graft copolymer which a copolymer polymerized from components having a specific content range, large-area automotive interior parts manufactured using the composite resin composition may have warpage deformation prevention capabilities and high-temperature anti-fogging abilities, and may the balance between impact, heat resistance, and rigidity.

As a specific example, based on 100 % by weight in total of the polyester resin composition, the non-graft copolymer may be included in an amount of 1 to 12 % by weight; or when the polyester resin composition includes an antioxidant and a lubricant, the non-graft copolymer may be included in an amount of 1 to 12 % by weight based on 100 % by weight in total of the polyester resin, the non-graft copolymer, the fiber-reinforcing agent, the antioxidant, and the lubricant.

Preferably, based on 100 % by weight in total of the polyester resin composition, the non-graft copolymer may be included in an amount of 3 to 11 % by weight; or when the polyester resin composition includes an antioxidant and a lubricant, the non-graft copolymer may be included in an amount of 3 to 11 % by weight based on 100 % by weight in total of the polyester resin, the non-graft copolymer, the fiber-reinforcing agent, the antioxidant, and the lubricant.

### Fiber-reinforcing agent

For example, the fiber-reinforcing agent according to the present invention may be glass fiber.

The glass fiber may include SiO₂, CaO, and Al₂O₃. In this case, the amount of SiO₂ may be greater than the total amount of CaO and Al₂O₃. Preferably, glass fiber in which the amount of SiO₂ is greater than the total amount of CaO and Al₂O₃ may be used.

The glass fiber may improve mechanical properties by reinforcing the rigidity of a molded article manufactured using the polyester resin composition of the present invention.

For example, the glass fiber may include 50 to 55 % by weight of silica, as a specific example, 50 to 55 % by weight of silica, 10 to 23 % by weight of alumina, and 13 to 26 % by weight of calcium oxide, more preferably 50 to 55 % by weight of silica, 10 to 16 % by weight of alumina, and 13 to 23 % by weight of calcium oxide, still more preferably 53 to 55 % by weight of silica, 12 to 16 % by weight of alumina, and 19 to 23 % by weight of calcium oxide. When glass fiber satisfying the content range is used, a polyester resin composition having excellent physical property balance between processability, specific gravity, and mechanical properties may be obtained, and a molded article having high heat resistance and rigidity may be manufactured using the polyester resin composition.

In the present disclosure, the content of silica may be measured or confirmed by X-ray fluorescence spectrometry (XRF).

The glass fiber may have a circular cross-section or a flat cross-section. When the glass fiber satisfies the range and has the cross-section, high rigidity, weight reduction, and excellent appearance may be secured.

For example, the glass fiber may have an aspect ratio of 1:1 to 1:4, as a specific example, 1:1 to 1:3, more specifically, 1:1. Here, the aspect ratio is expressed as the ratio (L/D) of length (L) to diameter (D). Within this range, high strength may be provided, and surface appearance may be improved. As a more preferable example, the aspect ratio is 1:3 to 1:4, as a most preferable example, 1:4. In this case, in addition to high rigidity, a product advantageous in terms of flatness, deformation, and orientation may be provided.

In the present disclosure, diameter and length may be measured using a scanning electron microscope (SEM). Specifically, 20 inorganic fillers are selected using a scanning electron microscope, the diameter and length of each inorganic filler are measured using an icon bar capable of measuring diameter, and then the average diameter and average length are calculated.

For example, the average diameter may be 1 to 13 µm, as a specific example, 5 to 10 µm, and the average length may be 2.5 to 6 mm, as a specific example, 3 to 4 mm. Within this range, processability may be improved, thereby improving the tensile strength of a molded article manufactured by molding the polyester resin composition of the present invention.

The cross-section of the glass fiber may have a rectangular, elliptical, dumbbell, or rhombic shape.

In one embodiment of the present invention, the glass fiber may be used in combination with other inorganic fibers, and the inorganic fibers may include one or more selected from carbon fiber, basalt fiber, and natural fibers such as kenaf and hemp.

In one embodiment of the present invention, during fiber manufacturing or post-processing, the glass fiber may be treated with a sizing agent, such as a lubricant, a coupling agent, and a surfactant. Within the scope of the definition of the present invention, lubricants, coupling agents, and surfactants commonly used as sizing agents in the technical field to which the present invention belongs may be used in the present invention without special limitations.

The lubricant is mainly used to form a good strand when manufacturing glass fiber, and the coupling agent plays a role in enabling good adhesion between glass fiber and a base resin. When the types of base resin and glass fiber are properly selected, excellent physical properties may be imparted to the thermoplastic resin composition.

The sizing agent, particularly, coupling agent may be applied directly to glass fiber or added to an organic matrix. To sufficiently exhibit the performance of the sizing agent, the content thereof may be appropriately selected.

Examples of the coupling agent include amine-based coupling agents, acrylic coupling agents, and silane-based coupling agents, preferably silane-based coupling agents.

As a specific example, the silane-based coupling agents may include one or more selected from the group consisting of γ-aminopropyl triethoxysilane, γ-aminopropyl trimethoxysilane, N-(beta-aminoethyl) γ-aminopropyl triethoxysilane, γ-methacryloxypropyl triethoxysilane, γ-glycidoxypropyl trimethoxysilane, and β-(3,4-epoxyethyl) γ-aminopropyl trimethoxysilane.

Based on 100 % by weight in total of the polyester resin composition, the fiber reinforcement agent may be included in an amount of 10 to 38 % by weight, 15 to 38 % by weight, 15 to 35 % by weight, 20 to 40 % by weight, or 25 to 35 % by weight; or may be included in the polyester resin composition in an amount of 10 to 38 % by weight, 15 to 38 % by weight, 15 to 35 % by weight, 20 to 40 % by weight, or 25 to 35 % by weight based on 100 % by weight in total of the polyester resin, the non-graft copolymer, the fiber-reinforcing agent, the antioxidant, and the lubricant. When the content is less than the range, cracks may occur on a molded article manufactured using the polyester resin composition including the fiber reinforcement agent. When the content exceeds the range, the dimensional stability of a molded article manufactured using the polyester resin composition including the fiber reinforcement agent may be reduced, or appearance may be poor.

### Polyester resin composition

A polyester resin composition according to one embodiment of the present invention is a composite material for providing improved thermal stability and mechanical properties, and may include appropriate additives.

For example, the additives may include an antioxidant, a lubricant, and/or a colorant.

The antioxidant may be selected from a phenolic antioxidant and a phosphite antioxidant.

The phenolic antioxidant and phosphite antioxidant may enhance the heat stabilization effect and are not particularly limited in type as long as the phenolic antioxidant and the phosphite antioxidant may prevent the high temperature-induced degeneration of the polyester resin composition or molded article. By including the phenolic antioxidant as an essential component, the thermal stability of polymers may be further improved by removing radicals generated in the polyester resin composition during molding.

The phenolic antioxidant may preferably include a hindered phenolic antioxidant having a crystallization temperature (Tm) of 110 to 130 °C.

As a specific example, the phenolic antioxidant may include tetrakis[ethylene-3-(3,5-di-t-butyl-hydroxyphenyl)propionate], octadecyl 3-(3,5-di-t-butyl-4-hydroxyphenyl)propionate, or a mixture thereof.

For example, the phosphite antioxidant (high phenolic antioxidant) may include a phosphite antioxidant having a melting temperature (Tm) of 180 to 240°C. As a specific example, the phosphite antioxidant may include tris(2,4-di-tert-butylphenyl) phosphite, 3,9-bis(2,6-di-tert-butyl-4-methylphenoxy)-2,4,8,10-tetraoxa-3,9-diphosphaspiro[5.5]undecane, bis(2,4-dicumylphenyl)pentaerythritol diphosphite, or a mixture thereof.

For example, based on 100 % by weight in total of the polyester resin, the non-graft copolymer, the fiber-reinforcing agent, the antioxidant, and the lubricant, the antioxidant may be included in an amount of 0.1 to 10 % by weight, 0.1 to 5 % by weight, 0.1 to 3 % by weight, 0.1 to 2 % by weight, 0.1 to 1 % by weight, or 0.1 to 0.5 % by weight. Within this range, appearance defects such as stains may be prevented from occurring on the surface of a manufactured molded article, so that the appearance may be excellent.

For example, the lubricant may be fatty acid, and serves to help the polyester resin composition maintain excellent releasability and injection properties.

A lubricant may be used in the present invention without particular limitation as long as the lubricant may secure the ease of ejection and flowability of an injection screw used to manufacture a molded article using a polyester resin composition including the lubricant.

The lubricant preferably includes a stearate-based lubricant, more preferably pentaerythritol tetrastearate, etc.

For example, based on 100 % by weight in total of the polyester resin, the non-graft copolymer, the fiber-reinforcing agent, the antioxidant, and the lubricant, the lubricant may be included in an amount of 0.1 to 10 % by weight, 0.1 to 5 % by weight, 0.1 to 3 % by weight, 0.1 to 2 % by weight, 0.1 to 1 % by weight, or 0.1 to 0.5 % by weight. Within this range, excellent releasability and injection properties may be imparted to the polyester resin composition.

As the colorant, various known colorants may be used as long as the colorants do not adversely affect the polyester resin composition of the present invention. Carbon black may be used as a representative example.

For example, the polyester resin composition may include a colorant in an amount of 0.1 to 10 parts by weight, 0.1 to 5 parts by weight, 0.1 to 3 parts by weight, 0.1 to 2 parts by weight, or 0.1 to 1 part by weight based on 100 parts by weight in total of the polyester resin, the non-graft copolymer, the fiber-reinforcing agent, the antioxidant, and the lubricant. Within this range, excellent colorability may be provided to the polyester resin composition.

In one embodiment of the present invention, the colorant may also be used in masterbatch form to improve commercialization.

The polyester resin composition may preferably be provided as a polyester resin composition for automotive interior parts such as large-area thin instrument panels, navigation systems exceeding 12 inches.

### Method of preparing polyester resin composition

Hereinafter, a method of preparing a polyester resin composition of the present invention will be described. In describing the method of preparing a polyester resin composition, all of the above-described polyester resin composition is included.

For example, the method of preparing a polyester resin composition of the present invention includes a step of feeding a polyester resin, a non-graft copolymer, and a fiber-reinforcing agent into an extruder and performing melt-kneading and extrusion.

For example, the method of preparing a polyester resin composition may include the above-described additives.

For example, the melt-kneading and extrusion step may be performed using one or more selected from a single-screw extruder, a twin-screw extruder, and a Banbury mixer, preferably, a twin-screw extruder. In this case, deterioration in mechanical properties and thermal stability may be prevented, and a polyester resin composition having excellent high-temperature anti-fogging ability may be provided.

The polyester resin composition according to the present invention may be prepared by a method known in the art. For example, the polyester resin composition may be prepared in the form of an extrudate by a method of melt-extruding a mixture of components and additives in an extruder, and the extrudate may be used to manufacture injection-molded articles and extrusion-molded articles.

In one embodiment of the present invention, the extrusion is performed at a temperature of 250 to 280 °C, or 260 to 270 °C. At this time, the temperature means temperature set in a cylinder.

As a specific example, according to one embodiment of the present invention, the step of performing melt-kneading and extrusion may be a step of feeding 59.5 to 69.5 % by weight of polybutylene terephthalate having an intrinsic viscosity of 0.7 to 0.9 dl/g; 5 to 10 % by weight of a non-graft copolymer; 20 to 40 % by weight of a fiber reinforcement agent; and 0.1 to 10 % by weight of other additives into an extruder and performing melt-kneading and extrusion.

In the present disclosure, various conditions used in the technical field to which the present invention belongs may be used as undefined melt-kneading and extrusion conditions. The extrudate may be formed into pellet or chip forms, for example, taking into account the convenience of injection molding.

In addition, a molded article including the polyester resin composition of the present invention will be described. In describing the molded article including the polyester resin composition of the present invention, all of the above-described polyester resin composition and method thereof is included.

### Molded article

Using the polyester resin composition of the present invention, a molded article requiring mechanical properties and thermal stability may be manufactured.

For example, the molded article may be an automotive interior part, such as a large-area thin instrument panel and a navigation system, that requires low-deformation thermal stability and high-temperature anti-fogging ability, or a housing for the automotive interior part.

The molded article of the present invention may be manufactured using methods commonly used in the art. For example, the molded article may be manufactured using an injection molding method (injection molding), an injection compression molding method, an extrusion molding method (sheet casting), a press molding method, a pressure molding method, a heat bending method, a compression molding method, a calender molding method, or a rotational molding method.

For example, the method of manufacturing a molded article may include a step of feeding a polyester resin, a non-graft copolymer, and additives into a main inlet of a twin-screw extruder (φ40, L/D: 42, SM Platek equipment) set to 260 °C at 200 rpm and a flow rate (F/R) of 35 kg/h, feeding a fiber-reinforcing agent into a side inlet at a flow rate of 15 kg/h, and performing melt-kneading and extrusion to obtain an extrudate, and a step of placing the extrudate in an injection molding machine to manufacture a molded article.

To verify the properties of the polyester resin composition of this invention,
the extrudate may be dried at 100 °C for more than 4 hours and then injected using an 80-ton injection molding machine (Engel, Victory 80).

During injection, the temperature of the mold is preferably 40 to 120 °C. When the mold temperature is below 40 °C, the appearance characteristics may deteriorate. When the mold temperature is 120 °C or higher, the cooling time may become longer, which may reduce productivity. Specifically, the mold temperature may be 60 to 88 °C, 70 to 80 °C, or 72 to 78 °C. Within this range, the appearance characteristics of injection-molded articles may be improved and the defect rate may be minimized due to improvement in injection characteristics.

For example, the injection process may be performed using an injection molding machine with the hopper temperature or nozzle temperature set to 240 to 260 °C, respectively.

According to one embodiment of the present invention, during the injection molding process of the injection-molded article, the injection speed of the melt containing the polyester resin composition may be 30 to 80 mm/s. Specifically, the injection speed of the melt containing the polyester resin composition during injection molding of the injection-molded article may be 35 to 75 mm/s, 45 to 65 mm/s, or 50 to 60 mm/s. Within this range, injection-molded articles with excellent quality may be manufactured by minimizing injection deviation at all points of the injection-molded article.

For example, the polyester resin composition may have a melt flow index of 12.8 g/10 min or more, 12.9 g/10 min or more, or 12.9 to 20 g/10 min as measured according to ISO1133 and may have specific gravity of 1.47 g/cm³ or more, 1.48 g/cm³ or more, or 1.48 to 1.53 g/cm³ as measured according to ISO1183. In this case, excellent thermal stability may be provided.

In the present disclosure, melt flow index may be measured at 265 °C under a load of 2.16 kg, and specific gravity may be measured at 23 °C.

In addition, for example, the polyester resin composition may have a high-load heat deflection temperature of 190 °C or higher, 200 °C or higher, 200 to 210 °C, or 202 to 205 °C as measured according to 100 ISO 75. In this case, excellent heat deflection temperature may be provided.

In the present disclosure, high-load heat deflection temperature may be measured under a high load of 1.80 MPa according to ISO 75.

In addition, for example, when flexural strength and flexural modulus are measured using a 4.0 mm specimen according to ISO 178, the polyester resin composition of the present invention may have a flexural strength of 180 MPa or more, 182 MPa or more, or 182 to 200 MPa and a flexural modulus of 8000 MPa or more, 8000 to 9000 MPa, or 8400 to 9000 MPa. In this case, excellent flexibility and processability may be provided.

In the present disclosure, the flexural strength and flexural modulus may be measured at a rate of 2 mm/min using SPAN 64 according to ISO 178.

In addition, the polyester resin composition of the present invention may have, for example, a Charpy impact strength of 8.0 kJ/cm² or more, 8.5 kJ/cm² or more, or 8.5 to 10.5 kJ/cm² as measured according to ISO 179/1eA. In this case, excellent impact resistance may be provided.

In the present disclosure, the Charpy impact strength may be measured at 23 °C using a notched specimen.

In addition, when an MD direction length (unit: mm) and a TD direction length (unit: mm) are measured by a lifting test and a value (TD/MD) is obtained by dividing the TD direction length by the MD direction length, the polyester resin composition has a value (TD/MD) of 1.60 or less, 1.30 to 1.60, or 1.35 to 1.60. In this case, excellent shrinkage resistance may be provided.

In addition, when measuring a lifting distance from a floor to four corners using a square specimen having a size of 100 mm × 100 mm × 1.56 mm according to a low-strain assessment method, the polyester resin composition may have a maximum lifting height of 5.0 mm or less, 1.0 to 5.0, 1.5 to 4.5, 1.5 to 4.0. In this case, warpage deformation may be sufficiently prevented to provide low deformation.

In addition, the polyester resin composition may have a haze of 10.0 or less, 5.0 or less, 1.0 to 9.0, or 2.0 to 8.0 as measured by the fogging test (150 °C, 5 hr). In this case, fogging may be prevented even at high temperatures.

Specifically, the molded article may be a large-area thin-walled automotive interior part or the housing thereof. In particular, the molded article may be a large-screen, thin-film head-up display (HUD) that requires both mechanical properties and thermal stability, but is not limited to a specific product.

In the molded article manufactured using the polyester resin composition according to one embodiment of the present invention, the material used is changed from a conventional material to a predetermined composite composition. Accordingly, fogging may be prevented at high temperatures, and haze may be improved. In addition, physical property balance among mechanical properties, fluidity, and thermal stability may be excellent, and product reliability and appearance may be improved.

In describing the polyester resin composition of the present invention, the method of preparing the same, and the molded article including the same, it should be noted that other conditions or equipment not explicitly described herein may be appropriately selected within the range commonly practiced in the art without particular limitation.

Hereinafter, examples of the present invention will be described in detail so that those skilled in the art to which the present invention pertains can easily practice the present invention. However, the present invention may be implemented in various different forms and is not limited to these embodiments.

### [Examples]

The specifications of each component used in examples are as follows. Here, % means wt%.
(A) Polybutylene terephthalate resin (weight average molecular weight: 75,000 g/mol, intrinsic viscosity: (IV) 0.8 dl/g)
(B1) SAN resin (styrene: 72 % by weight, acrylonitirile: 28 % by weight, 92RF (LG Chemical Co., Ltd.) with initiator polymerization and 2 degassing treatments)
(B2) SAN resin (styrene 72 % by weight, acrylonitirile: 28 % by weight, 92HRC (LG Chemical Co., Ltd.) with initiator polymerization and 1 degassing treatment)
(B3) SAN resin (styrene: 76 % by weight, acrylonitirile: 24 % by weight, 80HF (LG Chemical Co., Ltd.) with thermal polymerization and 2 degassing treatments)
(B4) ASA resin (acrylate: 45 % by weight, styrene: 41 % by weight, acrylonitirile: 14 % by weight, SA927 (LG Chemical Co., Ltd.))
(C-1) Flat-type glass fiber with a cross-sectional size of 7 µm × 28 µm, a length of 3 mm, and an aspect ratio of 1:4 (silica: 54 % by weight, alumina: 14 % by weight, calcium oxide: 22 % by weight)
(C-2) Flat-type glass fiber with a cross-sectional size of 10 µm × 20 µm, a length of 3 mm, and an aspect ratio of 1:2 (silica: 54 % by weight, alumina: 14 % by weight, calcium oxide: 22 % by weight)
(C-3) Cylinder-type glass fiber with a diameter of 10 µm and a length of 3 mm (silica: 54 % by weight, alumina: 14 % by weight, calcium oxide: 22 % by weight)
(D) Hindered phenolic antioxidant : BASF Co., IRGANOX B-225 (IR-1010:IR-168 = 50:50 weight ratio)
(E) Pentaerythritol tetrastearate lubricant : FACI ASIA PACIFIC PTE LTD Co. (product name: PETS-AHS)
(F) Colorant: Masterbatch obtained by mixing 20 % by weight of carbon black and 80 % by weight of polybutylene terephthalate resin

The manufacturing method and degassing treatment number for each non-graft copolymer of (B1) to (B3) are shown in Table 1 along with the physical properties and gas quality.

**[Table 1]**

| Classification | (B1) | (B2) | (B3) |
|---|---|---|---|
| | Initiator polymerization | Initiator polymerization | Thermal polymerization |
| | 2 degassing treatments | 1 degassing treatment | 2 degassing treatments |
| MI (220 °C, 10 kgf) | 29 | 35 | 27 |
| HDT (18.6 kgf) | 97.5 | 95.0 | 92.6 |
| B value (CIE, b) | 2.3 | 1.3 | 1.7 |
| T-VOC (ppm) (250 °C/10 min in purge & trap - GC/MS) | | | |
| Toluene | 50 | 124 | 58 |
| Ethylbenzene | 3 | 175 | 2 |
| Xylene | - | 3 | - |
| Styrene | 104 | 419 | 232 |
| Acrylonitirile | 1 | 19 | 2 |
| Isopropyl benzene | - | 12 | - |
| Propyl benzene | - | 11 | - |
| Alpha methyl styrene | - | 2 | - |
| Benzaldehyde | 1 | 5 | 1 |
| t-Butyl benzene | - | - | - |
| n-Butyl benzene | - | 3 | - |
| Sec-Butyl benzene | - | 2 | - |
| Benzene acetaldehyde | 1 | 9 | 1 |
| Acetophenone | - | 25 | - |
| Cumyl alcohol | - | 2 | - |
| 1,2-dicyanocyclobutane | - | 1 | 2 |
| Benzenebutanenitrile | 1 | 1 | - |
| Erucamide | - | - | - |
| C12 Hydrocarbons | 10 | 17 | 10 |
| Oligomer etc. | 225 | 750 | 2886 |
| T-VOC sum | 400 | 1600 | 3200 |

As shown in Table 1, depending on the polymerization methods and the number of degassing treatments, the physical properties, such as melt flow index, heat deflection temperature, and color index, and gas quality, such as total organic compound content, of the non-graft copolymers are different.

### Examples 1 to 4, and Comparative Example 1

The raw materials of the polyester resin composition shown in Table 2 below were mixed and extruded to obtain a polyester resin composition in the form of an extrudate having even dispersion. Then, an injection process was performed. Specifically, heat was applied to the extrudate, and the extrudate was injected into a mold frame, followed by cooling to obtain a specimen.

Specifically, each component was added according to the contents shown in Table 2, and melt-kneading was performed in the temperature range of 250 to 270 °C using a twin-screw extruder with L/D = 42 and Φ = 40 mm to obtain a resin composition in extrudate form.

After drying the prepared extrudate at 100 °C for more than 4 hours, the dried extrudate was injected at an injection temperature of 250 to 260 °C, a mold temperature of 70 °C, and an injection speed of 40 mm/s using an 80-ton injection molding machine (Victory 80, Engel Co.) to prepare a specimen for evaluating mechanical properties.

Specimens required for each measurement method were produced and the properties thereof were measured using the following methods, and the results are shown in Table 2 below.

**[Table 2]**

| Classification | Example 1 | Example 2 | Example 3 | Example 4 | Comparative Example 1 |
|---|---|---|---|---|---|
| A | 64.5 | 59.5 | 64.5 | 59.5 | 69.5 |
| B1 | 5 | 10 | 5 | 10 | |
| B2 | | | | | |
| B3 | | | | | |
| B4 | | | | | |
| C1 | 30 | 30 | | | |
| C2 | | | 30 | 30 | |
| C3 | | | | | 30 |
| D | 0.2 | 0.2 | 0.2 | 0.2 | 0.2 |
| E | 0.3 | 0.3 | 0.3 | 0.3 | 0.3 |
| F | 0.8 | 0.8 | 0.8 | 0.8 | 0.8 |

(In Table 2, A to E correspond to % by weight that makes up the total of 100% by weight, and F corresponds to parts by weight for the total 100 parts by weight of A to E.)

### Test Example 1 : Evaluation of physical properties of molded article specimens

The physical properties of the molded article specimens prepared in Examples 1 to 4 and Comparative Examples 1 were measured according to the following methods.
- Specific gravity: measured according to ISO 1183 (23 °C)
- Fluidity (melt flow rate): measured according to ISO 1133 (265 °C, 2.16 kg)
- Flexural strength and flexural modulus: measured according to ISO 178 (4.0 mm, SPAN 64, speed: 2 mm/min, 23 °C)
- Charpy impact strength (IZOD): measured according to ISO 179/1eA (Notched, 23 °C)
- Heat deflection temperature: measured according to ISO 75 (high load: 1.80 MPa)
- Thermal stability: measured according to UL94 V-test (V-0@0.8T)
- TD/MD: A shrinkage specimen having a size of 60 mm × 60 mm × 2 mm was manufactured according to the low-strain assessment method, the MD direction length (unit: mm) and TD direction length (unit: mm) thereof were measured, and a value (TD/MD) was calculated by dividing the TD direction length by the MD direction length.
- Bending evaluation: According to the lifting test, a square specimen having a size of 100 mm × 100 mm × 1.5 mm was stored in a constant temperature/humidity room at 23 °C/50 % RH for 24 hours. Then, the square specimen was placed on a flat floor surface, one edge was pressed against the floor surface, the lifting distance between the opposite edge and the floor surface was measured, and the maximum height was recorded. The average of the measurements of three specimens was taken as the representative value (maximum lifting height).
- Haze: According to the fogging test, a square specimen having a size of 100 mm × 100 mm × 1.5 mm was produced. The specimen was cut into 10 g pieces. Haze was measured with reference to the apparatus and process description shown in FIG. 1 below.

Specifically, before putting 10 g of the specimen into a test tube, check if there is any remaining material in the test tube, and wipe the inside of the test tube and the transparent glass plate three times with a 70 % ethanol solution. Since ethanol may remain in the test tube, use a hair dryer to dry the test tube before use.

Before measurement, the test specimens are dried at 120 °C for 2 to 4 hours and then stored in a constant temperature/humidity room at 23 °C/50 % RH for more than 24 hours before use.

When the test tube and transparent glass plate are prepared, place 10 g of the specimen in the test tube and seal the opening with the transparent glass plate. Set the measurement temperature (150 °C) and cooling temperature (23 °C), immerse the specimen in the device of FIG. 1 below for 5 hours, and then measure the haze value of the glass plate with a haze meter.

When measuring the haze value, the haze values for the total of three parts, the center part of the glass plate and the left and right parts based on the center, are measured and the average value thereof is recorded as the haze value of the specimen. Here, as the haze value decreases, the occurrence of fogging decreases.

The results measured using the evaluation criteria are shown in Table 3 below.

**[Table 3]**

| Classification | Example 1 | Example 2 | Example 3 | Example 4 | Comparative Example 1 |
|---|---|---|---|---|---|
| Specific gravity (g/cm3) | 1.50 | 1.48 | 1.50 | 1.48 | 1.52 |
| Fluidity (g/10 min) | 14.6 | 14.2 | 13.5 | 12.9 | 17.5 |
| Flexural strength (MPa) | 206 | 200 | 209 | 204 | 199 |
| Flexural modulus (MPa) | 8320 | 8420 | 8360 | 8430 | 8390 |
| Charpy impact strength (kJ/m²) | 10.4 | 9.7 | 10.1 | 9.5 | 8.5 |
| Heat deflection temperature | 205 | 203 | 204 | 202 | 204 |
| (high load, °C) | | | | | |
| TD/MD | 1.48 | 1.38 | 1.59 | 1.52 | 2.35 |
| Bending evaluation (mm) | 2.0 | 1.5 | 4.0 | 3.4 | 23.9 |
| Haze | 3.9 | 8.2 | 3.7 | 7.9 | 1.5 |

As shown in Table 3, the polyester resin compositions of Examples 1 to 4 according to the present invention exhibit low lifting properties (TD/MD), warpage deformation, and haze. Accordingly, the molded articles manufactured using the polyester resin compositions satisfy mechanical properties such as impact strength and flexural strength, exhibit excellent thermal stability and fluidity, and provide excellent product reliability and appearance due to improvement in high-temperature anti-fogging ability.

On the other hand, in the case of Comparative Example 1 that does not include the non-graft copolymer, compared to Examples 1 to 4, high-temperature anti-fogging ability and lifting properties are poor.

### Additional Comparative Example 1

The same procedure as in Example 1 was repeated except that (B-2) was used instead of (B-1) in the same amount. The properties of the molded article specimens manufactured in Additional Comparative Example 1 were evaluated in the same manner as in Test Example 1, and the results are shown in Table 4 below.

### Additional Comparative Example 2

The same procedure as in Example 1 was repeated except that (B-3) was used instead of (B-1) in the same amount. The properties of the molded article specimens manufactured in Additional Comparative Example 2 were evaluated in the same manner as in Test Example 1, and the results are shown in Table 4 below.

### Additional Comparative Example 3

The same procedure as in Example 1 was repeated except that (B-1) was used in an amount of 15 % by weight. The properties of the molded article specimens manufactured in Additional Comparative Example 3 were evaluated in the same manner as in Test Example 1, and the results are shown in Table 4 below.

### Additional Comparative Example 4

The same procedure as in Example 1 was repeated except that (B-1) was used in an amount of 7.5 % by weight and (B-4) corresponding to a graft copolymer was used in an amount of 7.5 % by weight. The properties of the molded article specimens manufactured in Additional Comparative Example 4 were evaluated in the same manner as in Test Example 1, and the results are shown in Table 4 below.

**[Table 4]**

| Classification | Additional Comparative Example 1 | Additional Comparative Example 2 | Additional Comparative Example 3 | Additional Comparative Example 4 |
|---|---|---|---|---|
| Specific gravity (g/cm3) | 1.50 | 1.50 | 1.46 | 1.45 |
| Fluidity (g/10 min) | 14.8 | 15.5 | 12.6 | 8.5 |
| Flexural strength (MPa) | 205 | 204 | 197 | 179 |
| Flexural modulus (MPa) | 8300 | 8310 | 8400 | 7500 |
| Charpy impact strength (kJ/m²) | 9. 9 | 9.7 | 8.7 | 10.2 |
| Heat deflection temperature (high load, °C) | 206 | 205 | 200 | 198 |
| TD/MD | 1.48 | 1.49 | 1.26 | 1.52 |
| Bending evaluation (mm) | 2.0 | 2.1 | 0.9 | 2.2 |
| Haze | 11.9 | 17.2 | 14.8 | 20.6 |

As shown in Table 4, in the case of Additional Comparative Example 1 and Comparative Example 2 in which the recovery operation was not properly performed even when a non-graft copolymer consisting of an aromatic vinyl compound-vinyl cyanide compound was included, heat deflection temperature, melting index, physical properties, and gas quality were not adequate. Thus, compared to Example 1, Additional Comparative Example 1 and Comparative Example 2 exhibited poor high-temperature anti-fogging ability.

In addition, in the case of Additional Comparative Example 3 including an excess of the non-graft copolymer, compared to Example 1, high-temperature anti-fogging ability deteriorated.

In addition, in the case of Additional Comparative Example 4 which does not include the non-graft copolymer, compared to Example 1, in addition to high-temperature anti-fogging ability, flexural strength and flexural modulus were poor.

That is, the molded article manufactured using the polyester resin composition according to one embodiment of the present invention satisfies the physical property balance between mechanical properties, fluidity, and thermal stability by using a low-strain material as a raw material, and has excellent product reliability and appearance by preventing the occurrence of fogging even at high temperatures.

## Claims

1. A polyester resin composition comprising a polyester resin; a non-graft copolymer consisting of an aromatic vinyl compound-vinyl cyanide compound; and a fiber-reinforcing agent,
wherein, when an MD direction length (unit: mm) and a TD direction length (unit: mm) are measured by a lifting test and a value (TD/MD) is obtained by dividing the TD direction length by the MD direction length, the polyester resin composition has the value (TD/MD) of 1.60 or less, and
wherein the polyester resin composition has a haze of 10.0 or less as measured by a fogging test (150 °C, 5 hr).

2. The polyester resin composition according to claim 1, wherein the polyester resin is a polyalkylene terephthalate resin.

3. The polyester resin composition according to claim 1, wherein the polyester resin has an intrinsic viscosity (η) of 0.7 to 0.9 dl/g.

4. The polyester resin composition according to claim 1, wherein, based on 100 % by weight in total of the polyester resin composition, the polyester resin is comprised in an amount of 56 % by weight or more.

5. The polyester resin composition according to claim 1, wherein the non-graft copolymer comprises 20 % by weight or more of a vinyl cyanide compound, has a heat deflection temperature of 96.5 °C or higher as measured in 18.6 kgf standard according to ASTM D648, and has a melting index (220 °C, 10 kgf) of 28 to 32 as measured according to ASTM D1238.

6. The polyester resin composition according to claim 1, wherein, based on 100 % by weight in total of the polyester resin composition, the non-graft copolymer is comprised in an amount of 12 % by weight or less.

7. The polyester resin composition according to claim 1, wherein the fiber-reinforcing agent is a glass fiber.

8. The polyester resin composition according to claim 7, wherein the glass fiber comprises SiO₂, CaO, and Al₂O₃, and an SiO₂ content is greater than a sum of CaO and Al₂O₃ contents.

9. The polyester resin composition according to claim 1, wherein the glass fiber comprises 50 to 55 % by weight of SiO₂, 15 to 21 % by weight of Al₂O₃, and 13 to 19 % by weight of CaO.

10. The polyester resin composition according to claim 1, wherein, based on 100 % by weight in total of the polyester resin composition, the fiber-reinforcing agent is comprised in an amount of 20 to 40 % by weight.

11. The polyester resin composition according to claim 1, wherein the polyester resin composition comprises an antioxidant and a lubricant, and each of the antioxidant and the lubricant is comprised in an amount of 0.1 to 10 % by weight based on 100 % by weight in total of the polyester resin, the non-graft copolymer, the fiber-reinforcing agent, the antioxidant, and the lubricant.

12. The polyester resin composition according to claim 1, wherein the polyester resin composition comprises a colorant in an amount of 0.1 to 10 parts by weight based on 100 parts by weight in total of the polyester resin, the non-graft copolymer, the fiber-reinforcing agent, the antioxidant, and the lubricant.

13. The polyester resin composition according to claim 1, wherein the polyester resin composition has a high-load heat deflection temperature of 190 °C or higher as measured under 1.82 MPa according to 100 ISO 75 and a flexural strength of 180 MPa or more and a flexural modulus of 8000 MPa or more as measured at a rate of 2 mm/min using a 4.0 mm specimen and SPAN 64 according to ISO 178.

14. The polyester resin composition according to claim 1, wherein, when measuring a lifting distance from a floor to four corners using a square specimen having a size of 100 mm × 100 mm × 1.56 mm according to a low-strain assessment method, the polyester resin composition has a maximum lifting height of 5.0 mm or less.

15. A method of preparing a polyester resin composition, comprising kneading and extruding a polyester resin; a non-graft copolymer consisting of an aromatic vinyl compound-vinyl cyanide compound; and a fiber-reinforcing agent,
wherein, when an MD direction length (unit: mm) and a TD direction length (unit: mm) are measured using a shrinkage specimen (size: 60 mm × 60 mm × 2 mm) and a value (TD/MD) is calculated by dividing the TD direction length (unit: mm) by the MD direction length (unit: mm), wherein the polyester resin composition has the value (TD/MD) of 1.60 or less, and wherein the polyester resin composition has a haze of 10.0 or less as measured by a fogging test (150 °C, 5 hr).

16. A molded article comprising the polyester resin composition according to any one of claims 1 to 14.
